# EUROPÄISCHE PATENTSCHRIFT

(11) **EP 2 536 628 B1**
(45) Veröffentlichungstag und Bekanntmachung des Hinweises auf die Patenterteilung: **25.05.2016**
(21) Anmeldenummer: 11701506.5
(22) Anmeldetag: 26.01.2011
(51) Int. Cl.: B64D 11/00

(54) **GEHÄUSELOSES STAUFACH**
STORAGE COMPARTMENT HAVING NO HOUSING
COMPARTIMENT DE RANGEMENT SANS BOÎTIER

(30) Priorität: 19.02.2010 US 306225 P; 19.02.2010 DE 102010008622
(43) Veröffentlichungstag der Anmeldung: 26.12.2012
(73) Patentinhaber: Airbus Operations GmbH, 21129 Hamburg (DE)
(72) Erfinder: SCHNEIDER, Uwe, 21635 Jork (DE); JESPERSEN, Andreas, 21614 Buxtehude (DE); GERBER, Thorsten, 22309 Hamburg (DE)
(74) Vertreter: Kopf Westenberger Wachenhausen Patentanwälte PartG mbB
(86) Internationale Anmeldenummer: PCT/EP2011/051055
(87) Internationale Veröffentlichungsnummer: WO 2011/101210

(56) Entgegenhaltungen:
- WO-A2-2010/037637
- US-A1- 2004 140 398
- US-A1- 2006 151 668

## Beschreibung

### GEBIET DER ERFINDUNG

Die Erfindung betrifft ein bewegliches Staufach für einen Passagierraum von zum Beispiel einem Flugzeug. Insbesondere betrifft die Erfindung ein bewegliches Staufach in Leichtbauweise. Außerdem betrifft die Erfindung die Verwendung eines derartigen Staufachs in einem Flugzeug.

### HINTERGRUND DER ERFINDUNG

Derzeit gibt es zwei unterschiedliche Gepäckablagesysteme für Flugzeugkabinen. Es gibt unbewegliche Gepäckablagen (Fix Bins), in Form eines zur Passagierseite hin mit einer Verschlussklappe versehenen Staufachs. Alternativ gibt es schwenkbare Gepäckablagen (Movable Bins), in Form eines zur Passagierseite hin schwenkbaren Staufachs ohne Verschlussklappe. Alle Gepäckablagen, deren Ladekante sich in irgendeiner Weise bewegen lässt, werden als Movable Bin bezeichnet. Ein grundsätzlicher Aspekt eines beweglichen Staufachs ist, dass die geöffnete Beladeposition von der geschlossenen Position abweicht.

Das an dem Flugzeugrumpf befestigte Bauteil eines beweglichen Gepäckstaufachs ist das Gehäuse (Housing) und dient u. A. zur Aufnahme der Schütte (Bin) bzw. des Staufachkörpers selbst. Auf eine Verschlussklappe kann hierbei verzichtet werden, da das Staufach beim Eintauchen ins Gehäuse (Housing) zu einem geschlossenen Kasten wird. Bei beweglichen Staufächern ist die flexible Lage der wesentliche Vorteil, im geschlossenen Zustand bieten sie ein größeres Raumgefühl, und in abgesenkter, offener Position ist ein bequemes Be- und Entladen möglich.

Die Verbindung zwischen Flugzeugrumpf und Gehäuse erfolgt über Zugstangen, die zwischen den flugzeugseitigen und gehäuseseitigen Beschlägen befestigt sind. Die direkte Verbindung von Gehäuse zum Staufach erfolgt über Drehlager, oder rollengeführte Schienensysteme, wobei das Gehäuse und das Staufach zu einer vorinstallierten Baugruppe verbunden sein können.

Ein Beispiel für ein Movable Bin, welches in einem Gehäusekasten als Staufachmodul vorinstalliert ist, ist aus der DE 10 2007 030331 A1 bzw. aus der WO 2009/003945 A1 zu entnehmen.

US 2006/0151668 A1 beschreibt eine Schwenkanordnung nach dem Oberbegriff des Anspruchs 1, aufweisend eine erste Schwenknabe mit einer Eingriffserweiterung und ein erstes Laufringelement mit einer zentralen Buchse. Eine zentrale Eingriffshülse ist drehbar in der Buchse befestigt und weist eine Eingriffskammer auf, die geeignet ist, drehbar in die Eingriffserweiterung einzugreifen.

US 2004/0140398 A1 beschreibt ein Gepäckfach mit einer Tragestruktur, einer Schütte und einer Führung. Die Schütte definiert ein zumindest teilweise geschlossenes Volumen zur Aufnahme von Gepäck. Die Führung verbindet die Schütte mit der Tragestruktur und ist geeignet, die Schütte linear entlang eines ersten Abschnitts und geschwenkt entlang eines zweiten Abschnitts zu bewegen.

### ZUSAMMENFASSUNG DER ERFINDUNG

Es ist eine Aufgabe der Erfindung, ein Staufach bereitzustellen, welches ein geringes Gewicht aufweist. Ferner ist es eine Aufgabe der Erfindung, ein Staufach bereitzustellen, welches im Falle eines Crashs keine zusätzliche Gefährdung der Passagiere darstellt.

Diese und weitere Aufgaben werden durch den Gegenstand der jeweiligen unabhängigen Ansprüche erfüllt. Weitere Ausführungsformen sind den jeweiligen abhängigen Ansprüchen zu entnehmen.

Im Allgemeinen weist ein Staufach gemäß der Erfindung einen Staufachkörper, eine Befestigungsstrebe und eine Lagerung zwischen Staufachkörper und Befestigungsstrebe auf. Der Staufachkörper kann als eine zu einer Seite hin offene Kiste ausgebildet sein. Die Befestigungsstrebe kann beispielsweise an einem Spant einer Flugzeugstruktur befestigt werden. Die Befestigungsstrebe kann hierfür ein entsprechend gestaltetes Befestigungsende aufweisen.

Es wird angemerkt, dass die Befestigungsstrebe die Form einer Stange wie auch die Form eines Trapezes oder eines flächigen Gebildes aufweisen kann. Ferner kann die Befestigungsstrebe eine Kombination aus mehreren Befestigungsstreben sein, welche ein Fachwerk ausbilden, das insbesondere geeignet ist, die auftretenden Kräfte aufzunehmen.

Die Befestigungsstrebe weist ferner ein Lagerungsende zur Aufnahme einer Lagerung auf, wobei der Staufachkörper derart an dem Lagerungsende der Befestigungstrebe angeordnet ist, dass der Staufachkörper zumindest um eine Schwenkachse schwenkbar ist.

Da üblicherweise die Staufächer in einem Passagierraum eines Flugzeugs quer zur Flugrichtung, d. h. quer zu einer Längsachse des Flugzeugrumpfes angeordnet sind, ist die Schwenkachse des Staufachkörpers im Wesentlichen parallel zur Längsrichtung des Passagierraums in dem Flugzeugrumpf. Die Befestigungsstrebe wird entsprechend quer zur Längsrichtung zwischen einem Lagerungspunkt des Staufachkörpers und einem Spant der Flugzeugstruktur angeordnet sein, und damit insbesondere die quer zur Flugrichtung wirkenden Kräfte aufnehmen können.

Durch die Verwendung von Befestigungsstreben kann auf ein geschlossenes Gehäuse zur Aufnahme eines Staufachkörpers verzichtet werden. Dies führt primär zu einer Reduktion des Gewichts.

Gemäß einer Ausführungsform der Erfindung weist das Staufach ferner einen Gleitschuh auf, welcher benachbart zu dem Befestigungsende der Befestigungsstrebe angeordnet ist. Dieser Gleitschuh ist an der Befestigungsstrebe derart befestigt, dass er gegenüber der Seitenwand des Staufachs in Flugrichtung vorne angeordnet ist, so dass im Falle eines Crashs, wenn der Staufachkörper nach vorne gedrückt wird, dieser an dem Gleitschuh abgestützt wird, welcher benachbart zu oder sogar an dem Spant der Flugzeugstruktur angeordnet ist. Auf diese Weise kann verhindert werden, dass im Falle eines Crashs die an der Befestigungsstrebe auftretenden Momente dazu führen, dass die Befestigungsstrebe zerstört wird und damit das Staufach von der Flugzeugstruktur abgerissen wird. Dieses wiederum reduziert die Gefährdung der Passagiere im Falle eines Crashs.

Der Gleitschuh kann sowohl an der Befestigungsstrebe als auch an dem Staufachkörper befestigt sein. Ferner kann der Gleitschuh integral mit der Befestigungsstrebe ausgebildet sein. Gemäß einer bevorzugten Ausführungsform ist der Gleitschuh aus einem Kunststoff, beispielsweise Polyamid, hergestellt, so dass der Staufachkörper bei einem Schwenken zwischen einer offenen und einer geschlossenen Position mit seiner Seitenwand leicht an dem Gleitschuh entlang bewegbar ist.

Zwischen einem Gleitschuh und dem Staufachkörper kann auch ein Spalt vorgesehen sein, so dass der Staufachkörper berührungslos an der Befestigungsstrebe und dem Gleitschuh vorbei bewegbar ist. Im Falle eines Crashs würde eine geringförmige Deformation der Befestigungsstrebe dafür sorgen, dass der Staufachkörper an dem Gleitschuh anliegt und damit würden wiederum die Kräfte in Flugrichtung über den Gleitschuh auf die Flugzeugstruktur abgeleitet.

Gemäß einer Ausführungsform der Erfindung weist der Staufachkörper einen Verschlussriegel auf, wobei der Staufachkörper durch den Verschlussriegel in einer geschlossenen Position arretierbar ist. Der primäre Zweck eines derartigen Verschlussriegels ist, ein unbeabsichtigtes Öffnen des Staufachkörpers zu verhindern. Der Verschlussriegel kann entweder in eine korrespondierende Aussparung in der Befestigungsstrebe eingreifen, wenn der Verschlussriegel seitlich an dem Staufachkörper angeordnet ist. Andererseits kann der Verschlussriegel direkt in eine Aussparung im Spant der Flugzeugstruktur eingreifen, wenn der Verschlussriegel an einer Rückseite bzw. einer seitlichen Kante der Rückseite des Staufachkörpers angeordnet ist.

Zum Erhöhen des Komforts bei der Betätigung des Staufachkörpers, d. h. beim Öffnen bzw. Schließen des Staufachkörpers kann ein Dämpfer vorgesehen sein, welcher zwischen der Befestigungsstrebe und dem Staufachkörper angeordnet ist. Es wird angemerkt, dass der Dämpfer ein passiver Kolbendämpfer sein kann. Alternativ kann der Dämpfer auch ein aktives Element sein, welches einerseits die Bewegungsgeschwindigkeit beim Öffnen und Schließen dämpft und andererseits eine aktive Kraftunterstützung für die Betätigung des Staufachkörpers bereitstellt.

Zur weiteren Erhöhung der Sicherheit im Crash-Fall weist die Befestigungsstrebe des Staufachs benachbart zum Befestigungsende eine Gelenkstelle auf, wobei die Gelenkstelle derart ausgebildet ist, dass die Befestigungsstrebe in Flugrichtung abknickt bzw. abgewinkelt wird, sobald eine Kraft in Flugrichtung auf diese Strebe wirkt. Eine derartige Gelenkstelle kann als Scharnier ausgebildet sein, über welches keine Kräfte in Flugrichtung übertragen werden. Die Befestigungsstrebe kann jedoch auch an der Gelenkstelle mit einem verjüngten Querschnitt, einer Art Filmscharnier, ausgebildet sein, so dass bei einem Auftreten einer Kraft in Flugrichtung eine Soll-Biegestelle ausgebildet ist.

Um die Steifigkeit des Staufachkörpers zu erhöhen, kann an der Vorderseite des Staufachkörpers eine Griffleiste integral ausgebildet sein. Dies kann entweder durch ein stranggepresstes Hohlprofil erreicht werden oder indem ein griffleistenförmiges PU-Schaumprofil mit einem Wabenkern verbunden wird, welcher zwischen zwei Decklagen angeordnet ist. Durch die integral ausgebildete Griffleiste wird die Steifigkeit des Staufachkörpers aufgrund der Geometrie erhöht, so dass die Wandstärken des Staufachkörpers reduziert und damit auch das Gewicht reduziert sein kann.

Diese oben beschriebenen Aspekte können sowohl bei einem Staufach realisiert werden, welches einen Staufachkörper aufweist, der um eine definierte Achse schwenkbar ist, als auch bei einem Staufach mit einem Staufachkörper, der entlang einer Führungsschiene sowohl translatorisch als auch rotatorisch bewegbar ist.

Gemäß einer Ausführungsform der Erfindung weist ein Flugzeug ein Staufach mit den oben beschriebenen Merkmalen auf. Das Flugzeug kann ferner ein Verkleidungspaneel aufweisen, welches oberhalb des Staufachs in dem Passagierraum des Flugzeugs angeordnet ist. Das Verkleidungspaneel kann an seinem unteren Rand einen Abschnitt aufweisen, der sich in Richtung der Flugzeugstruktur erstreckt. Dieser von dem Passagierraum aus nicht sichtbare Abschnitt des Verkleidungspaneels kann so gestaltet sein, dass der Staufachkörper im geschlossenen Zustand zusammen mit diesen Abschnitt einen geschlossenen Kasten bildet. Hierdurch kann ein Hintergreifen des Verkleidungspaneels durch beispielsweise Gegenstände, welche sich in dem Staufachkörper befinden, verhindert werden.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### KURZE BESCHREIBUNG DER ZEICHNUNGEN

Fig. 1 ist eine schematische Seitenansicht eines Staufachs gemäß einer ersten Ausführungsform der Erfindung.
Fig. 2 ist eine Detailansicht der Lagerung des Staufachs aus Fig. 1.
Fig. 3 ist eine schematische Seitenansicht eines Staufachs gemäß einer zweiten Ausführungsform der Erfindung.
Fig. 4 ist eine Detailansicht der Lagerung des Staufachs aus Fig. 3.
Fig. 5 ist eine Draufsicht einer Befestigungsstrebe, die nicht Teil der Erfindung ist, zwischen zwei Staufächern.
Fig. 6 ist eine Seitenansicht eines Staufachs gemäß der zweiten Ausführungsform der Erfindung.
Fig. 7 ist eine Seitenansicht einer Variante eines Staufachs gemäß der zweiten Ausführungsform der Erfindung.
Fig. 8 ist eine Seitenansicht eines Staufachs gemäß der ersten Ausführungsform der Erfindung.
Fig. 9 ist eine weitere Seitenansicht eines Staufachs gemäß der ersten Ausführungsform der Erfindung.
Figuren 10 bis 12 sind Ansichten, welche das Auftreten von Momenten in einer Befestigungsstrebe bei unterschiedlichen Konfigurationen veranschaulichen.
Figuren 13 und 14 zeigen Schnittdarstellungen von Staufachkörpern gemäß weiterer Ausführungsformen der Erfindung.

### DETAILLIERTE BESCHREIBUNG DER AUSFÜHRUNGSFORMEN

Die Herausforderung, ein bewegliches Staufach unterzubringen liegt hauptsächlich in dem begrenzt zur Verfügung stehenden Bauraum für die Kinematik, sowie der Aufgrund der Verdoppelung der Sandwichfläche nahezu analogen Verdoppelung des Baugruppengewichts. Üblicherweise ist ein Gehäuse ein geschlossener Schubkasten, mit einer zur Passagierseite hin offenen Kontur, und ein Staufachkörper ist ein verkleinerter geschlossener Schubkasten, mit einer zur Passagierseite hin offenen Kontur, innerhalb des Gehäuses. Diese Doppelwandige Bauweise, einschließlich der erforderlichen Bewegungsspalte und Kinematik führt zu einem erheblichen Verlust an nutzbarem Ladevolumen, gegenüber gleich großer festen Staufächern (fix bins).

Selbiges gilt für das Baugruppengewicht, wobei die doppelwandige Bauweise, einschließlich der erforderlichen Kinematik zu einem erheblichen Gewichtsanstieg führt, gegenüber gleich großen beweglichen Bins mit herkömmlicher Kinematik.

Gemäß der Erfindung wird nun vorgeschlagen, bei einem beweglichen Staufach (movable bin) auf die Doppelwandigkeit zu verzichten und den Staufachkörper direkt an der Struktur zu haltern, was bei intelligenter Auslegung zu einer Gewichtsneutralität gegenüber einem Fix Bin mit identischem Ladevolumen führen kann.

Vorteilhaft kann hierbei gegeben sein, dass alle für den Passagier sichtbaren Flächen, einer konservativen Staufachbaugruppe erhalten bleiben. Ferner kann gegeben sein, dass alle Anforderungen an eine schnelle und einfach Montage, die an eine konservative Staufachbaugruppe gestellt werden, erhalten bleiben. Die Anforderungen an Lastverhalten und Zuverlässigkeit einer konservative Staufachbaugruppe bleiben ebenfalls erhalten. Auch die zur Verfügung-Stellung von Passagierversorgungsfunktionalitäten bleibt unbeeinträchtigt.

Somit kann das Ladevolumen von beweglichen Staufächern, mittels dem erfindungsgemäßen "gehäuselosen Staufach" bei identischen Außenabmessungen vergrößert werden, das Gewicht nahezu aber halbiert werden, ohne dass Passagier und Herstellbetrieb einen erkenntlichen Nachteil hinnehmen müssen.

Ferner lässt sich hinsichtlich der Installationszeiten sagen, dass bei diesem "gehäuselosen Staufach" die Installation mit einem Schnellverschlusssystem erfolgen kann, entweder über strukturseitige Rollen, die in staufachkörperseitige axiale Schnellverschlussaufnahmen, oder Schienen eingeführt werden. Dies beschleunigt zusätzlich die Installationszeiten in der Kabinenendmontage.

Die hier beschriebenen Staufächer verzichten auf die Doppelwandigkeit und sind somit direkt an der Struktur des Flugzeugs befestigt. Die Installation erfolgt für um ein festes Drehlager schwenkbare Staufachkörper beispielsweise mit einem Schnellverschlusssystem, mittels strukturseitig gelagerten Rollen, die in binnenseitig axiale Schnellverschlussaufnahmen eingeklipst werden.

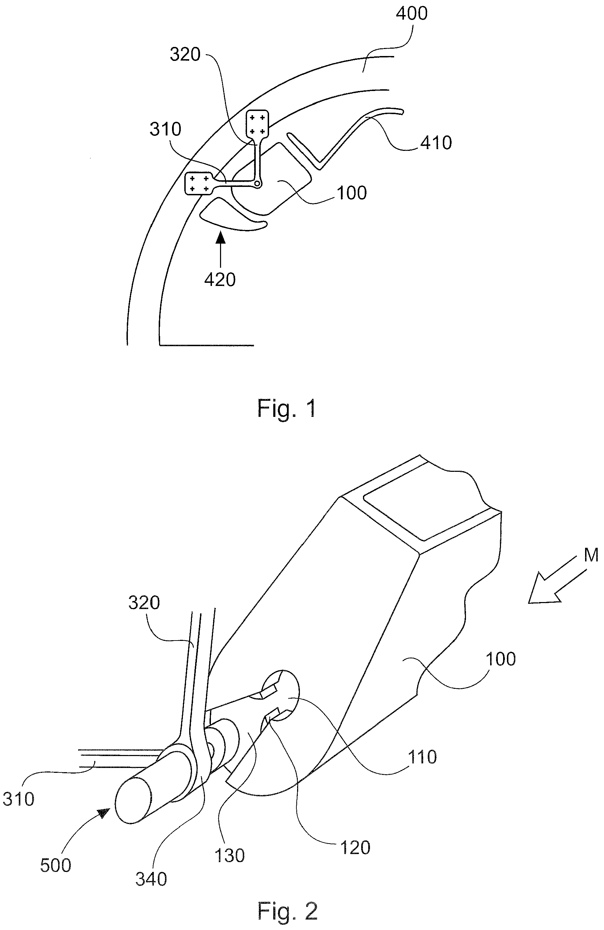

Fig. 1 zeigt eine seitliche Ansicht eines Staufachs gemäß einer ersten Ausführungsform der Erfindung. Fig. 2 zeigt eine isometrische Detailansicht der Lagerung des Staufachkörpers an der Befestigungsstrebe des Staufachs aus Fig. 1. Der Staufachkörper 100 weist in seiner Seitenwand eine Aussparung 110 zur Aufnahme einer Lagerungsrolle auf. Zur Sicherung der Lagerungsrolle in der Aussparung 110 sind axiale Umgreifer 120 vorgesehen, welche vergleichbar mit einem Schnappverschluss ein Einrasten einer Lagerungsrolle beim Einschieben des Staufachkörpers 100 in seine Montageposition ermöglichen. Die Umgreifer 120 können federvorgespannt sein.

Zum leichteren Einführen des Staufachkörpers 100 kann eine Einführschräge 130, d.h. ein konisch sich zum hinteren Ende des Staufachkörpers hin erstreckender Bereich vorgesehen sein. Nachdem die Befestigungsstrebe 310 in horizontaler Richtung und die Befestigungsstrebe 320 in vertikaler Richtung an einem Spant 400 der Flugzeugstruktur befestigt sind, kann gemäß dieser Ausführungsform der Staufachkörper 100 in Montagerichtung M zunächst mit seiner Einführ-(Montage-)schräge 130 auf eine Rolle an dem Lagerungspunkt 340 der Befestigungsstreben 310 und 320 geschoben werden und durch ein weiteres Einschieben über die Umgreifer 120 hinweg bis in die Aussparung 110 eingerastet werden. Auf diese Weise kann ein axial schwenkbarer Staufachkörper leicht zwischen einem Versorgungskanal 420 und einem Verkleidungspaneel (Deckenlining) 410 montiert werden.

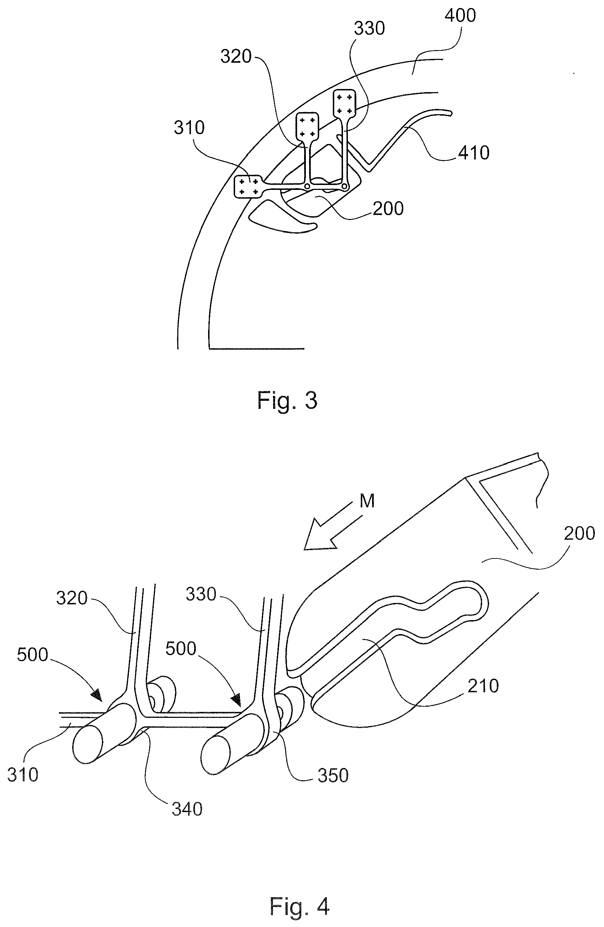

Fig. 3 zeigt ein Staufach gemäß einer zweiten Ausführungsform der Erfindung. Fig. 4 zeigt eine isometrische Darstellung der Lagerung des Staufachkörpers 200 des Staufachs aus Fig.3 an Rollen 500. Eine horizontale Befestigungsstrebe 310 sowie eine vertikale Befestigungsstrebe 320 und eine weitere vertikale Befestigungsstrebe 330 sind an einem Spant 400 einer Flugzeugstruktur befestigt. Die Befestigungsstreben 310, 320 und 330 bilden ein Fachwerk, wobei an der jeweiligen Verbindungsstelle zwischen der Strebe 310 und 320 bzw. 310 und 330 ein Lagerungspunkt 340 und 350 ausgebildet ist. An den zwei Lagerungspunkten sind jeweils Rollen 500 vorgesehen, welche beide in eine Schiene 210 eingreifen können, welche in der Seitenwand des Staufachkörpers 200 ausgebildet oder eingelassen ist.

Vergleichbar mit der ersten Ausführungsform kann auch hier der Staufachkörper 200 in Montagerichtung M beispielsweise über Einführschrägen zunächst auf die erste Rolle an dem Lagerungspunkt 350 und bei einem weiteren Einschieben auf die weitere Rolle an dem Lagerungspunkt 340 geschoben werden. Durch das Zusammenspiel der zwei Lagerungspunkte mit den entsprechend angeordneten Rollen und der besonderen Gestaltung der Schiene kann eine komplexe Bewegung des Staufachkörpers sowohl translatorisch als auch rotatorisch erzielt werden.

Somit ist eine schnelle und einfache Montage in einem Arbeitsschritt gewährleistet, wobei ein zeitintensives Einstellen oder Nachjustieren nicht erforderlich ist. Beiden Prinzipien ist gemeinsam, dass die Rollen an den Lagerungspunkten, die in den Staufachkörper in Flugrichtung vorn eingreifen, als Festlager und hinten als Loslager ausgeführt sind.

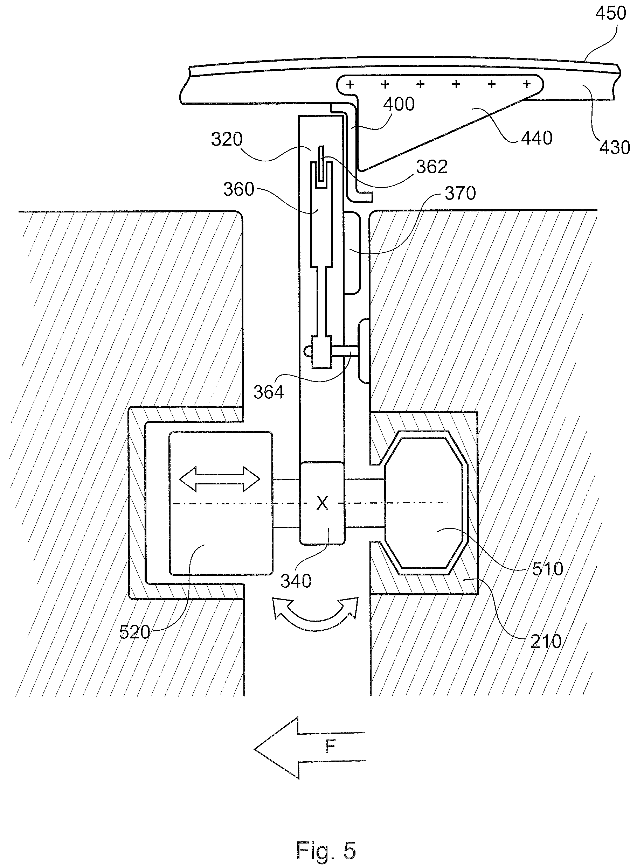

Wie in Fig. 5 dargestellt, weisen die Rollen 500 auf der einen Seite der Befestigungsstrebe eine Rolle 510 mit einer Form auf, welche ein Festlager realisieren kann, und auf der anderen Seite eine Rolle 520 auf, welche ein Loslager realisieren kann. Hierzu ist beispielsweise die Rolle 510 mit seitlichen Schrägen ausgebildet, welche in eine Schiene 210 mit korrespondierenden Schrägen eingreifen. Die Rollen 520 können im Gegensatz hierzu als glatte Wälzkörper ausgebildet sein, welche in eine Schiene eingreifen, die keinerlei Hinterschnitte und damit kein Umgreifen der Rolle in axialer Richtung ermöglichen.

Das Festlager ist geeignet, auftretende Lasten in Flugrichtung aufzunehmen, wobei das Loslager einerseits keine derartigen Lasten in Flugrichtung aufnehmen kann und andererseits geeignet ist, selbst grobe, auftretende struktur- und staufachseitige Fertigungstoleranzen auszugleichen. Die eigentliche führende Lagerung befindet sich also in Flugrichtung vorne, wobei das hintere Loslager ausschließlich eine Führung quer zur Flugrichtung bereitstellt. Sogenannte Biegemomente um die Achse der Lagerung werden kompensiert bzw. neutralisiert, da das Fachwerk der Befestigungsstreben zu beiden Seiten durch die gleichzeitige Aufnahme eines links- und rechtsseitigen Staufachkörpers nicht auf Verbiegen beansprucht wird.

In Fig. 5 ist ferner eine mögliche Befestigung der Befestigungsstrebe 320 an einem Spant 400 dargestellt, jedoch ohne die erfindungsgemäße Gelenkstelle. Der Spant 400 wird beispielsweise über ein Element 440 an einem Stringer 430 befestigt. Der Stringer 430 bildet wiederum die tragende Struktur für die Außenhülle 450 des Flugzeugs.

Ferner ist in Fig. 5 ein Dämpfer 360 dargestellt, welcher an einem Befestigungspunkt 362 an der Befestigungsstrebe 320 befestigt ist, und über ein Befestigungselement 364 an dem Staufachkörper befestigt ist. Der hier dargestellte Dämpfer 360 ist als Kolbendämpfer ausgebildet. Der in das Festlagerfachwerk integrierte Kolbendämpfer 360 dämpft den Staufachkörper beim Öffnungsvorgang und kann in geöffneter Position einfach am Staufachkörper montiert werden. Die Rollen 510 und 520 werden über ein metallisches Zwischenfachwerk, d. h. den Befestigungsstreben 310, 320 und gegebenenfalls 330 an den Strukturspanten 400 vernietet.

Schließlich ist in Fig. 5 auch ein Gleitschuh 370 dargestellt, welcher zwischen Befestigungsstrebe 320 und Staufachkörper angeordnet ist.

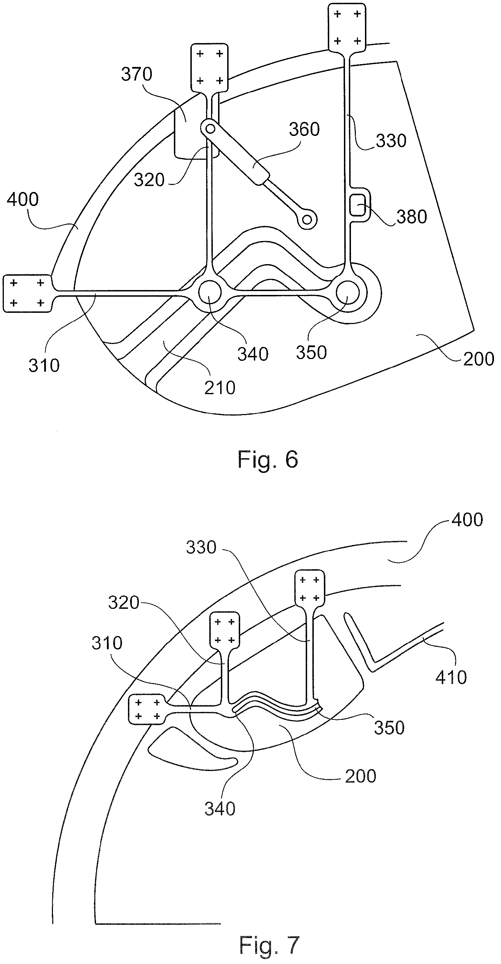

In Fig. 6 ist ebenfalls eine Seitenansicht eines Staufachs gemäß der zweiten Ausführungsform der Erfindung zu sehen. Die horizontale Befestigungsstrebe 310 bildet zusammen mit der vertikalen Befestigungsstrebe 320 einen ersten Lagerungspunkt 340. Die Befestigungsstrebe 310 bildet außerdem zusammen mit der vertikalen Befestigungsstrebe 330 einen zweiten Lagerungspunkt 350. An der vertikalen Befestigungsstrebe 320 ist benachbart zu dem Spant 400 ein Gleitschuh 370 vorgesehen. Außerdem ist an dem Befestigungsende, d. h. demjenigen Ende der Befestigungsstrebe, welches mit dem Spant 400 vernietet wird, ein Ende eines Kolbendämpfers 360 befestigt. Das andere Ende des Kolbendämpfers ist an dem Staufachkörper 200 befestigt. Außerdem zeigt die Darstellung eine Schlossfalle 380 zur Verriegelung des Staufachkörpers 200 in einer geschlossenen Position. Gemäß dieser Ausführungsform ist an der Seitenwand des Staufachkörpers 200 ein Verschlussriegel vorgesehen, welcher in die Schlossfalle 380 eingreifen kann. Schließlich ist in der Seitenwand des Staufachkörpers 200 eine Schiene 210 vorgesehen, welche im Eingriff mit Lagerungen an den Lagerungspunkten 340 und 350 ist.

Der Verschlussriegel, welcher in die Schlossfalle 380 eingreift, kann über Seilzüge von einem zentralen Griff aus betätigt sein. Die Verschlussriegel können über einen Federmechanismus einseitig belastet sein, so dass sie selbsttätig beim Verschließen des Staufachkörpers einschnappen und zum Öffnen entriegeln werden müssen.

Gemäß einer alternativen Ausführungsform, die in Fig. 7 dargestellt ist, kann bei einem schienengefiihrten Staufachkörper die Schiene Teil der Befestigungsstreben sein, so dass auf der Seite des Staufachkörpers 200 die Rollen vorgesehen sein können, welche in diese Schienen eingreifen.

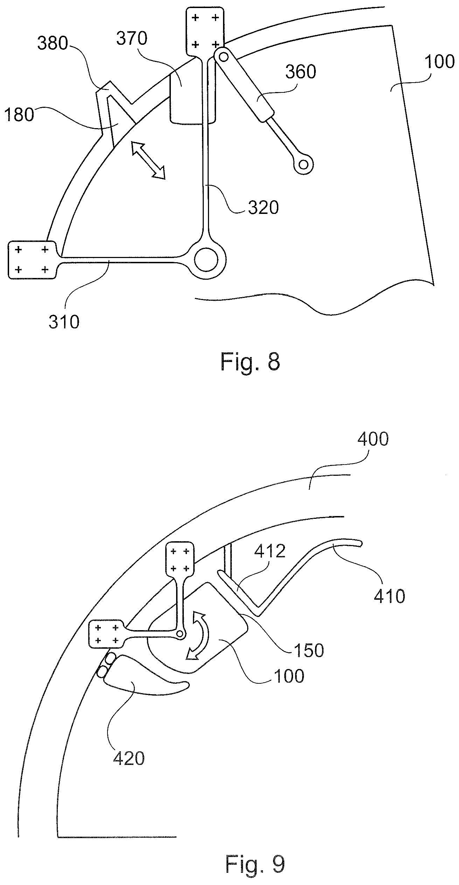

Die Schlossfalle 380 kann alternativ direkt in dem Strukturspant 400 integriert sein. Eine derartige Ausführung ist in Fig. 8 dargestellt, wobei ein Verschlussriegel 180, welcher an einem seitlichen Rand der Rückseite des Staufachkörpers 100 angeordnet ist, in die Schlossfalle 380 in dem Spant 400 eingreift.

Die Ausführungsform der Fig. 8 weist ebenfalls eine horizontale Befestigungsstrebe 310 und eine vertikale Befestigungsstrebe 320 auf. Außerdem sind auch hier ein Kolbendämpfer 360 und ein Gleitschuh 370 dargestellt.

Gemäß dieser Ausführungsform werden die Verschluss- und Riegelkräfte an dem Verschlussriegel 180 nicht in das Befestigungsfachwerk geleitet, sondern direkt in den Strukturspant 400 übertragen, was weiteren Leichtbau durch Lastpfadoptimierung ermöglicht.

Fig. 9 zeigt den Aspekt, dass auf eine Verschlussklappe des Staufachkörpers verzichtet werden kann, wenn das Staufach beim Eintauchen in die Deckenverkleidung zu einem geschlossenen Kasten wird. Dies kann erreicht werden, indem ein Abschnitt 412 an dem Verkleidungspaneel 410 derart ausgebildet ist, dass er sich in Richtung zur Flugzeugstruktur hin erstreckt. Dieser Abschnitt 412 bildet einen Abschluss für den Staufachkörper 100, d.h. die offene Seite 150 des Staufachkörpers 100 wird durch den Abschnitt 412 des Verkleidungspaneels 410 verschlossen.

Das Verkleidungspaneel übernimmt durch eine Vergrößerung der herkömmlichen Bauweise die Verschlussfunktion, die bei herkömmlichen Staufächern durch das Gehäuse erfüllt wird, und ist direkt an dem Strukturspant befestigt, was wiederum die Deckenmontage erleichtert.

Ferner ist in Fig. 9 ein Versorgungskanal 420 angedeutet, in welchem Passagierversorgungsfunktionalitäten (Sauerstoff, Leseleuchte, Passagierluft, Stewardruf und Lautsprecher) vorgesehen sein können. Der Versorgungskanal 420 kann direkt an Strukturschienen befestigt werden, was wiederum die Versorgungskanalmontage von der Staufachkörpermontage trennt und somit erleichtert. Die Kontur des Versorgungskanals 420 bildet den unteren Abschluss zu dem Staufachkörper. Der Versorgungskanal hat keine direkte mechanische Verbindung mit dem Staufachkörper. Alle für einen Passagier sichtbaren Flächen einer konservativen Staufachmodulgruppe bleiben auf diese Weise erhalten.

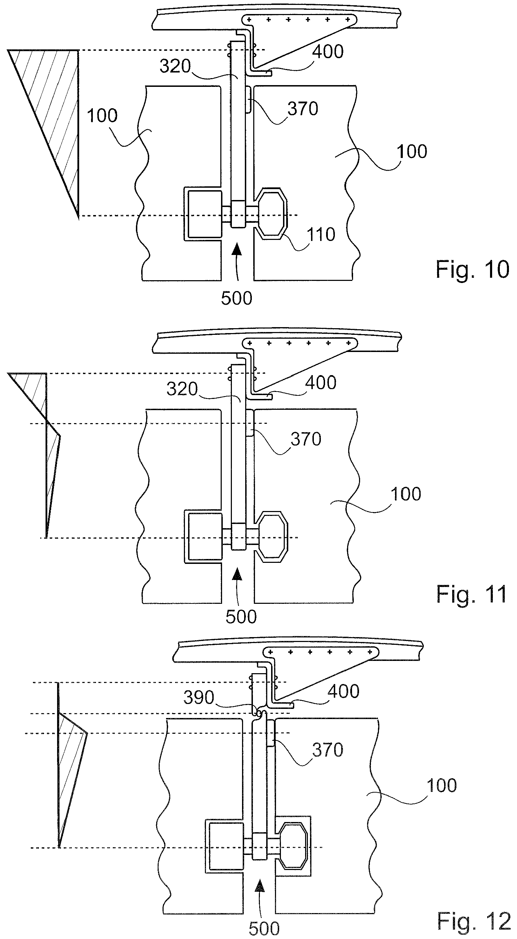

Im Folgenden werden insbesondere in den Spanten auftretende unzulässige Biegelasten, z. B. Crash-Lasten in Flugrichtung veranschaulicht. In den Figuren 10, 11 und 12 werden durch entsprechende Anschlagsflächen für den Staufachkörper Biegelasten auf das Fachwerk oder die Strukturspanten direkt begrenzt. Bei einem Crash fließen zum Zeitpunkt t = 0 die Crash-Lasten über die Führungsrollen in das Zwischenfachwerk und erzeugen aufgrund des langen Hebelarms zur starren Vernietung am Spant ein maximales Moment (Fig. 10).

Hierbei verformt sich das Zwischenfachwerk in Flugrichtung, bis es zum Flächenkontakt des spantnahen Gleitschuhs 370 mit dem Staufachkörper 100 kommt (Fig. 11). Aufgrund des zum Zeitpunkt t > 0 verkürzten Hebelarms und des Momentansprungs zur Führungsrolle hin, kommt es zu einer Reduzierung und teilweise Aufhebung des Momentes, welches in den Spant überführt werden muss. Die Strukturbelastung läge damit im zulässigen Bereich. Es wird angemerkt, dass sogenannte Crash-Lasten nur bei geschlossenen Staufachkörpern betrachtet werden und somit durch diese Deformationsbegrenzung nicht zum Versagen des Systems führen.

Erfindungsgemäß ist eine Gelenkstelle 390, beispielsweise ein Drehlager in das Zwischenfachwerk integriert, hierbei wird das in den Spant einbrachte Moment auf Null reduziert, allerdings wachsen die Biegekräfte im Zwischenfachwerk an (Fig. 12).

Ein Mittelweg zwischen den in den Figuren 11 und 12 dargestellten Konfigurationen kann durch eine definierte Soll-Biegestelle erreicht werden. Wenn diese Soll-Biegestelle etwa an der Position des Drehlagers angeordnet ist, werden Momente in geringerem Masse auf den Spant übertragen als bei der starren Befestigungsstrebe, und andererseits werden die Momente in der Befestigungsstrebe im Vergleich zur starren Bauform leicht erhöht, jedoch geringer als beim Vorliegen eines Drehlagers.

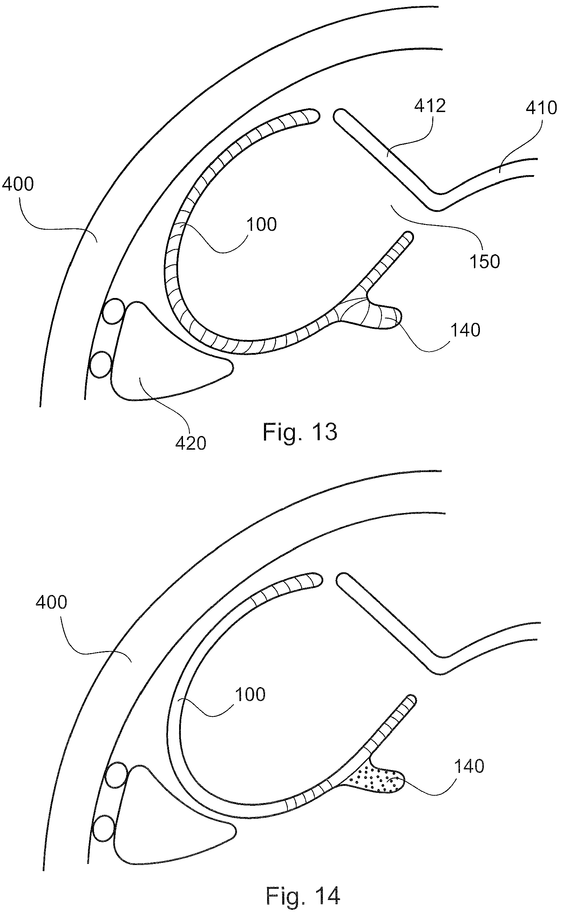

Wie in Fig. 13 dargestellt, kann die Integration einer Griffleiste 140 bei einer Ausführung des Staufachkörpers als stranggepresstes Hohlprofil in einem Arbeitsschritt mit angespritzt werden, und somit zu einer weiteren Aussteifung des Staufachkörperbodens führen und infolgedessen zu einer weiteren Gewichtserleichterung beitragen.

Alternativ kann, wie in Fig. 14 gezeigt, die Integration einer Griffleiste 140 bei einer Ausführung des Staufachkörpers als Sandwich-Baugruppe in einem Bauteil integriert werden. Hierbei wird zuerst eine Innendecklage gelegt, anschließend ein Wabenkern darüber gelegt und mit einem griffleistenförmigen PU-Schaumprofil verklebt. Zum Schluss wird eine Außendecklage darübergelegt und das gesamte Halbzeug in einem Autoklaven verklebt. Im Ergebnis wird eine gewichtsneutrale Aussteifung des Staufachkörperbodens erreicht und infolgedessen eine weitere Gewichtserleichterung ermöglicht.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. Andere Variationen der offenbarten Ausführungsformen können durch einen Fachmann beim Umsetzen der beanspruchten Erfindung verstanden und bewirkt werden aus einem Studium der Zeichnungen, der Offenbarung und der anhängenden Ansprüche.

In den Ansprüchen schließt das Wort "aufweisend" nicht andere Elemente oder Schritte aus und der unbestimmte Artikel "ein" schließt eine Mehrzahl nicht aus.

### BEZUGSZEICHENLISTE

- 100, 200: Staufachkörper
- 110: Aussparung
- 120: Umgreifer
- 130: Einführschräge
- 140: Griffleiste
- 150: offene Seite des Staufachkörpers
- 180: Verschlussriegel
- 210: Führungsschiene
- 310, 320, 330: Befestigungsstrebe
- 340, 350: Lagerungsstelle
- 360: Kolbendämpfer
- 370: Gleitschuh
- 380: Schlossfalle
- 390: Gelenkstelle
- 400: Spant
- 410: Verkleidungspaneel
- 412: Abschnitt des Verkleidungspaneels
- 420: Versorgungskanal
- 500: Lagerung
- 510: Festlager-Rolle
- 520: Loslager-Rolle

## Patentansprüche

1. Staufach für einen Passagierraum eines Flugzeugs, aufweisend:
einen Staufachkörper (100, 200),
mindestens eine Befestigungsstrebe (310, 320, 330) mit einem Befestigungsende und einem Lagerungsende, und
eine Lagerung (500),
wobei die Lagerung derart zwischen dem Staufachkörper und dem Lagerungsende der Befestigungsstrebe angeordnet ist, dass der Staufachkörper um eine Schwenkachse schwenkbar ist,
wobei die Schwenkachse im montierten Zustand parallel zur Längsrichtung des Passagierraums angeordnet ist, und
wobei das Befestigungsende der Befestigungsstrebe mit einem Spant einer Flugzeugstruktur des Flugzeugs verbindbar ist,
**dadurch gekennzeichnet, dass** die Befestigungsstrebe (310, 320, 330) benachbart zum Befestigungsende eine Gelenkstelle (390) aufweist, zum Abknicken der Befestigungsstrebe in Richtung der Schwenkachse.

2. Staufach nach Anspruch 1, ferner aufweisend einen Gleitschuh (370) zur Aufnahme von Kräften in Richtung der Schwenkachse, wobei der Gleitschuh benachbart zu dem Befestigungsende der Befestigungsstrebe (310, 320, 330) angeordnet ist.

3. Staufach nach Anspruch 1, wobei der Staufachkörper ferner einen Verschlussriegel (180) aufweist, wobei der Staufachkörper durch den Verschlussriegel in einer geschlossenen Position arretierbar ist.

4. Staufach nach Anspruch 1, ferner einen Dämpfer (360) aufweisend, wobei der Dämpfer derart zwischen der Befestigungsstrebe (310, 320, 330) und dem Staufachkörper (100, 200) angeordnet ist, dass eine Bewegung des Staufachkörpers gedämpft ist.

5. Staufach nach Anspruch 1, wobei an einer Vorderseite des Staufachkörpers eine Griffleiste (140) ausgebildet ist.

6. Staufach nach einem der Ansprüche 1 bis 5, wobei an zwei gegenüberliegenden Seiten des Staufachkörpers jeweils eine Rolle (510, 520) und eine korrespondierende Aussparungen (110) zur Aufnahme einer Rolle vorgesehen ist, sodass der Staufachkörper (100) um eine von den Rollen definierte Achse schwenkbar ist.

7. Staufach nach einem der Ansprüche 1 bis 5, wobei an zwei gegenüberliegenden Seiten des Staufachkörpers jeweils ein Rollenpaar und eine Führungsschiene (210) vorgesehen ist, sodass eine Schwenkbewegung des Staufachkörpers (200) durch ein Zusammenspiel der Rollenpaare mit den Führungsschienen vorgegeben ist.

8. Flugzeug mit einem Staufach gemäß Anspruch 1.

9. Flugzeug nach Anspruch 8, ferner aufweisend ein Verkleidungspaneel (410) zur Verkleidung der Flugzeugstruktur oberhalb des Staufachs (100, 200), wobei das Verkleidungspaneel einen Abschnitt (412) aufweist, der derart ausgebildet ist, dass der Staufachkörper im geschlossenen Zustand durch den Abschnitt verschlossen wird.

## Claims

1. A hatrack for a passenger cabin of an aircraft, comprising:
- a hatrack body (100, 200);
- at least one fixing brace (310, 320, 330) with a fixing end and a bearing end; and
- a bearing (500);
wherein the bearing is arranged between the hatrack body and the bearing end of the fixing brace in such a way that the hatrack body is pivotable about a pivot axis; wherein the pivot axis is arranged parallel to the longitudinal direction of the passenger a cabin; and
wherein the fixing end of the fixing brace is connectable to a frame of a plane structure of the aircraft, **characterized in that**
the fixing brace (310, 320, 330) comprises an articulation point (390) adjacent to the fixing end to fold the fixing brace in the direction of the pivot axis.

2. The hatrack according to claim 1, further comprising a sliding block (370) for absorbing forces in the direction of the pivot axis,
wherein the sliding block is arranged adjacent to the fixing end of the fixing brace (310, 320, 330).

3. The hatrack according to claim 1,
wherein the hatrack body further comprises a locking latch (180), wherein the hatrack body is lockable in a closed position using the locking latch.

4. The hatrack according to claim 1, further comprising a damper (360),
wherein the damper is arranged between the fixing brace (310, 320, 330) and the hatrack body (100, 200) in such a way that a movement of the hatrack body is cushioned.

5. The hatrack according to claim 1,
wherein a handle strip (140) is formed on a front side of the hatrack body.

6. The hatrack according to claim 1 to 5, further comprising a roller (510, 520) and a corresponding notch (110) for receiving a roller on each of first and second opposing sides of the hatrack body in such a way that the hatrack body (100) is pivotable about an axis defined by the rollers.

7. The hatrack according to claim 1 to 5, further comprising a pair of rollers and a guide rail (210) on each of first and second opposing sides of the hatrack body in such a way that a movement of the hatrack body (200) is determined by an interaction between the pairs of rollers and the guide rails.

8. An aircraft with a hatrack according to claim 1.

9. The aircraft according to claim 8, further comprising a covering panel (410) for covering the aircraft structure above the hatrack (100, 200), wherein the covering panel has a portion (412) formed such that the hatrack body, in the closed position, is closed by the portion.

## Revendications

1. Compartiment de rangement pour une cabine des passagers d'un avion, présentant :
un corps (100, 200) de compartiment de rangement,
au moins une barre de fixation (310, 320, 330) munie d'une extrémité de fixation et d'une extrémité de palier, et
un palier (500),
dans lequel le palier est disposé entre le corps de compartiment de rangement et l'extrémité de palier de la barre de fixation de manière à ce que le corps de compartiment de rangement soit pivotable autour d'un axe de pivotement,
dans lequel l'axe de pivotement, à l'état monté, est disposé parallèlement au sens longitudinal de la cabine des passagers, et
dans lequel l'extrémité de fixation de la barre de fixation est raccordable à une membrure d'une structure d'avion de l'avion,
**caractérisé en ce que** la barre de fixation (310, 320, 330) présente de manière avoisinante à l'extrémité de fixation un point d'articulation (390) destiné à fléchir la barre de fixation en direction de l'axe de pivotement.

2. Compartiment de rangement selon la revendication 1, présentant en outre un patin (370) destiné à recevoir des forces en direction de l'axe de pivotement, dans lequel la patin est disposé de manière avoisinante à l'extrémité de fixation de la barre de fixation (310, 320, 330).

3. Compartiment de rangement selon la revendication 1, dans lequel le corps de compartiment de rangement présente en outre un verrou de fermeture (180), dans lequel le corps de compartiment de rangement peut être bloqué dans une position fermée au moyen du verrou de fermeture.

4. Compartiment de rangement selon la revendication 1, présentant en outre un amortisseur (360), dans lequel l'amortisseur est disposé entre la barre de fixation (310, 320, 330) et le corps (100, 200) de compartiment de rangement de manière à ce qu'un mouvement du corps de compartiment de rangement soit amorti.

5. Compartiment de rangement selon la revendication 1, dans lequel une baguette de préhension (140) est réalisée sur un côté avant du corps de compartiment de rangement.

6. Compartiment de rangement selon l'une quelconque des revendications 1 à 5, dans lequel, sur deux côtés opposés du corps de compartiment de rangement, respectivement un galet (510, 520) et un évidement correspondant (110) sont ménagés pour le logement d'un galet, de sorte que le corps (100) de compartiment de rangement est pivotable autour d'un axe défini par les galets.

7. Compartiment de rangement selon l'une quelconque des revendications 1 à 5, dans lequel, sur deux côtés opposés du corps de compartiment de rangement, une paire de galets et un rail de guidage (210) sont respectivement ménagés, de sorte qu'un mouvement de pivotement du corps (200) de compartiment de rangement est défini par une interaction des paires de galets avec les rails de guidage.

8. Avion comprenant un compartiment de rangement selon la revendication 1.

9. Avion selon la revendication 8, présentant en outre un panneau de revêtement (410) pour le revêtement de la structure d'avion au-dessus du compartiment de rangement (100, 200), dans lequel le panneau de revêtement présente une section (412) qui est réalisée de manière à ce que le corps de compartiment de rangement, à l'état fermé, soit fermé par la section.
